# FASCICULE DE BREVET EUROPEEN

(11) **EP 3 089 806 B1**
(45) Date de publication et mention de la délivrance du brevet: **12.02.2020**
(21) Numéro de dépôt: 14833524.3
(22) Date de dépôt: 26.12.2014
(51) Int. Cl.: B01D 45/06, B60K 15/035, B60K 15/03

(54) **TUBULURE DE REMPLISSAGE D'UN RÉSERVOIR DE CARBURANT AVEC SEPARATEUR LIQUIDE VAPEUR A DEUX POSITIONS**
DÜSE ZUR BEFÜLLUNG EINES BRENNSTOFFTANKS MIT EINEM FLÜSSIG-DAMPF-SEPARATOR MIT ZWEI STELLUNGEN
NOZZLE FOR FILLING A FUEL TANK, COMPRISING A LIQUID-VAPOUR SEPARATOR HAVING TWO POSITIONS

(30) Priorité: 30.12.2013 FR 1363691
(43) Date de publication de la demande: 09.11.2016
(73) Titulaire: Plastic Omnium Advanced Innovation and Research, 1130 Bruxelles (BE)
(72) Inventeur: LE MAT, Yvan, F-75018 Paris (FR); OSZWALD, Pierre, F-60350 Berneuil sur Aisne (FR)
(74) Mandataire: de la Bigne, Guillaume Michel Marie
(86) Numéro de dépôt international: PCT/FR2014/053565
(87) Numéro de publication internationale: WO 2015/101750

(56) Documents cités:
- DE-A1-102006 004 630

## Description

L'invention s'intéresse au domaine des systèmes de remplissage en carburant d'un réservoir de véhicule, et plus particulièrement aux dispositifs de séparation liquide vapeur disposés sur la tubulure de remplissage et placés en règle générale en entrée du conduit amenant le carburant au réservoir.

Les dispositifs de séparation liquide vapeur sont connus de l'état de la technique. Ils sont reliés d'une part au dispositif d'évacuation des vapeurs de carburant disposé dans le réservoir, et d'autre part à un système de filtration des vapeurs au travers duquel les vapeurs sont traitées avant d'être renvoyées dans l'atmosphère. Leur fonction est d'extraire, les gouttelettes et les condensats présents dans les vapeurs s'échappant du réservoir, de manière à éviter de surcharger le système de traitement des vapeurs. Le dispositif de séparation comprend donc des moyens de séparation et des moyens de drainage permettant de retourner vers le réservoir les éléments liquides piégés dans le séparateur. Ces dispositifs peuvent être installés sur le réservoir de carburant comme le propose la publication US 6 405 747, ou directement sur la tubulure de remplissage comme le propose la publication US 2008/018972. Cette deuxième forme de montage permet, entre autres avantages, de récupérer les condensats le plus en aval possible de la tubulure conduisant les vapeurs du réservoir vers le dispositif de filtration. DE 10 2006 004630 A1 décrit une tubulure de remplissage avec un séparateur liquide vapeur.

Un séparateur liquide vapeur se présente en règle générale sous la forme d'un corps creux dans lequel sont disposées des parois fixes, orientées verticalement, et formant un labyrinthe au travers duquel les vapeurs circulent. Les gouttelettes de carburant sont retenues par les parois du labyrinthe sur lesquelles elles s'écoulent par gravité et sont récupérées dans les moyens de drainage. Les moyens de drainage sont reliés au réservoir de carburant par un conduit ou, préférentiellement, débouchent directement dans le conduit de réception de la tubulure de remplissage.

Lorsque le véhicule circule, les gouttelettes extraites des vapeurs provenant du réservoir sont rejetées directement dans la tubulure de remplissage, et retournent vers le réservoir par ladite tubulure. Les vapeurs ont également la possibilité de revenir vers la tubulure de remplissage par le conduit de drainage, ce qui permet d'équilibrer les pressions dans le circuit. La tubulure de remplissage étant fermée par le bouchon de réservoir du véhicule, les vapeurs ne peuvent donc pas s'échapper vers l'extérieur par ce canal.

En revanche, lorsqu'on procède au remplissage du réservoir, le flux de vapeurs augmente, et une partie de ce flux peut alors s'échapper vers l'atmosphère par la tubulure de remplissage qui est en position ouverte.

Aussi, il est prévu un dispositif permettant d'isoler le conduit de drainage de la tubulure de remplissage pendant cette opération. Ce dispositif peut se présenter sous la forme d'un clapet venant obturer le passage entre le conduit de drainage et la tubulure de remplissage, et qui est actionné par le mouvement d'introduction d'une canule dans la tubulure de remplissage.

On observe toutefois que, lorsque le débit de remplissage, et par voie de conséquence le flux de vapeur, sont élevés, l'opération de remplissage est perturbée par la fermeture prématurée du pistolet de remplissage. Ces perturbations sont causées par une surpression excessive dans le réservoir de carburant.

L'invention a pour objet d'apporter une solution originale à cet inconvénient.

La tubulure de remplissage d'un réservoir de carburant selon l'invention comprend un conduit de réception destiné à recevoir une canule de remplissage, et un séparateur liquide vapeur, comprenant un corps creux dans lequel débouchent un unique conduit d'entrée d'un flux de vapeurs provenant du réservoir de carburant, un conduit de drainage s'écoulant dans le conduit de réception, et un conduit de sortie des vapeurs, ledit corps creux contenant des moyens de séparation permettant d'extraire des gouttelettes présentes dans le flux de vapeurs de manière à ce qu'elles s'écoulent dans le conduit de drainage,

La tubulure de remplissage se caractérise en ce que les moyens de séparation du séparateur liquide vapeur comprennent au moins une paroi mobile entre une première et une seconde configuration, de sorte que,
- dans la première configuration, la paroi mobile forme avec des parois du corps creux un labyrinthe dans lequel le flux de vapeurs passant du conduit d'entrée vers le conduit de sortie est forcé de circuler selon un chemin donné et que,
- dans la seconde configuration, la paroi mobile est disposée de manière à définir un passage dans lequel circule le flux de vapeurs du conduit d'entrée vers le conduit de sortie selon un chemin évitant tout ou partie du chemin parcouru par lesdites vapeurs lorsque la paroi mobile est dans la première configuration, la section dudit passage étant aménagée de sorte que la perte de charge subie par le flux de vapeurs circulant dans le corps creux entre le conduit d'entrée et le conduit de sortie est strictement inférieure à celle subie par un même flux de vapeurs lorsque la paroi mobile est dans la première configuration.

Ainsi, lorsque le réservoir est en condition de remplissage et que la canule est insérée dans le conduit de réception de la tubulure, la paroi mobile des moyens de séparation est placée dans la seconde configuration, de sorte que la perte de charge entre le conduit d'entrée et le conduit de sortie est sensiblement réduite. En raison de cette perte de charge réduite par rapport à la première configuration, le flux de vapeur ne passe alors plus par le labyrinthe de parois servant à piéger les gouttelettes, et passe plus directement du conduit d'entrée vers le conduit de sortie en direction du filtre. L'écoulement du flux de vapeur en est facilité d'autant, ce qui permet de réduire la surpression dans le réservoir et d'éviter les fermetures prématurées du pistolet.

Les moyens de séparation sont remis dans la première position lorsque l'opération de remplissage est terminée et que l'opérateur retire la canule de remplissage de la tubulure.

L'invention peut également connaître des formes de réalisations multiples dont les caractéristiques, prises isolément ou en combinaison, sont les suivantes :
- les moyens de séparation du séparateur liquide vapeur comprennent au moins une paroi mobile en rotation autour d'un axe préférentiellement vertical.
- le corps creux du séparateur liquide vapeur a la forme générale d'un cylindre, de même axe que l'axe de rotation de la paroi mobile, et a une section circulaire dont le diamètre intérieur est sensiblement égal à une largeur de ladite paroi mobile.
- les moyens de séparation du séparateur liquide vapeur comprennent deux parois mobiles disposées de sorte que, lorsqu'elles sont placées dans ladite seconde configuration, des sections de l'intersection du conduit d'entrée et du conduit de sortie avec le corps creux sont incluses dans un espace situé entre les deux parois mobiles.
- Le séparateur liquide vapeur de la tubulure de remplissage comprend en outre une cloison d'isolation reliant entre elles les deux parois mobiles et disposée de sorte que, lorsque les parois mobiles sont placées dans la seconde configuration, le conduit d'entrée et le conduit de sortie communiquent par un passage, isolé du conduit de drainage, et compris entre les deux parois mobiles et situé entre un plateau supérieur et la cloison d'isolation.
- La tubulure de remplissage comprend un clapet mobile entre une position ouverte laissant libre un passage entre le conduit de drainage et le conduit de réception lorsque les moyens de séparation sont dans la première configuration, et une position fermée obturant le passage entre le conduit de drainage et le conduit de réception lorsque les moyens de séparation sont dans la seconde configuration.
- Les moyens de séparation du séparateur liquide vapeur comprennent au moins une paroi mobile en rotation autour d'un axe préférentiellement horizontal, et pour laquelle :
   ∘ dans ladite première configuration, la paroi mobile du séparateur liquide vapeur est disposée sensiblement perpendiculairement au flux de vapeurs entrant dans le corps creux par le conduit d'entrée
   ∘ dans ladite deuxième configuration, la paroi mobile du séparateur liquide vapeur est disposée de sorte que le conduit d'entrée et le conduit de sortie sont isolés du conduit de drainage.
- Le corps creux du séparateur liquide vapeur a une forme sensiblement cylindrique ou hémisphérique, et la paroi mobile pivote autour d'un axe situé dans un plan équatorial du corps creux et a une forme similaire à une section équatoriale intérieure dudit corps creux.
- Les moyens de séparation du séparateur liquide vapeur sont mobiles en translation le long d'une direction.
- Le corps creux a une forme sensiblement cylindrique et les moyens de séparation comprennent un piston mobile en translation à l'intérieur du corps creux le long d'un axe préférentiellement vertical, comprenant une tête dont la section correspond à la section intérieure du corps creux, et une paroi s'étendant sous ladite tête sensiblement perpendiculairement au flux de vapeurs entrant dans le corps creux par le conduit d'entrée, de sorte que :
   ∘ dans la première configuration, des sections d'intersection des conduits d'entrée et de sortie avec le corps creux sont disposées en dessous de la tête du piston mobile, de manière à ce que la paroi du piston mobile forme avec les parois du corps creux un labyrinthe dans lequel le flux de vapeur provenant du conduit d'entrée et se dirigeant vers le conduit de sortie est forcé de circuler,
   ∘ dans la seconde configuration, lesdites sections d'intersection des conduits d'entrée et de sortie avec le corps creux, sont disposées au-dessus de la tête du piston mobile de manière à isoler le conduit d'entrée et le conduit de sortie du conduit de drainage.
- Les moyens de séparation comprennent au moins une paroi fixe s'étendant depuis la partie supérieure du corps creux dans une direction sensiblement perpendiculaire au flux de vapeurs entrant dans le corps creux par le conduit d'entrée, paroi fixe le long de laquelle coulisse une paroi mobile parallèle à la paroi fixe, de sorte que :
   ∘ dans la première configuration, la paroi mobile est disposée dans le prolongement de la paroi fixe afin que le flux de vapeurs circulant du conduit d'entrée vers le conduit de sortie selon un chemin donné,
   ∘ dans la seconde configuration, la paroi mobile se superpose à la paroi fixe afin que le flux de vapeurs circule du conduit d'entrée vers le conduit de sortie selon un chemin plus court que dans la première configuration.
- La paroi mobile est reliée par l'intermédiaire d'un pied de liaison à un obturateur de sorte que, lorsque la paroi mobile est disposée dans la première configuration, l'obturateur laisse ouvert le passage entre le conduit de drainage et le conduit de réception, et lorsque la paroi mobile est disposée dans la seconde configuration, l'obturateur ferme le passage entre le conduit de drainage et le conduit de réception.
- La tubulure de remplissage comprend en outre des moyens pour activer le passage du séparateur liquide vapeur de la première configuration à la deuxième configuration sous l'action d'introduction de la canule dans le conduit de réception de la tubulure de remplissage.
- Le séparateur liquide vapeur de la tubulure de remplissage comprend des moyens élastiques pour engendrer le passage du séparateur liquide vapeur de la deuxième configuration à la première configuration, lorsque la canule est retirée du conduit de réception de la tubulure de remplissage.

L'invention sera mieux comprise à la lecture des figures annexées, qui sont fournies à titre d'exemples et ne présentent aucun caractère limitatif, dans lesquelles :
- La figure 1 représente une vue schématique d'un réservoir de véhicule comprenant une tubulure de remplissage équipée d'un séparateur liquide vapeur.
- La figure 2 représente, selon une première forme de réalisation de l'invention, une vue schématique en coupe d'une tubulure de remplissage équipée d'un séparateur liquide vapeur disposé dans la première configuration.
- La figure 3 représente la tubulure de remplissage selon la première forme de réalisation de l'invention en vue de dessus.
- La figure 4 représente la tubulure de remplissage selon la première forme de réalisation de l'invention dans laquelle le séparateur liquide vapeur est disposé dans la seconde configuration.
- La figure 5 représente la tubulure de remplissage selon la première forme de réalisation de l'invention en vue de dessus.
- La figure 6 représente, selon une seconde forme de réalisation de l'invention, une vue schématique en coupe d'une tubulure de remplissage équipée d'un séparateur liquide vapeur disposé dans la première configuration.
- La figure 7 représente la tubulure de remplissage selon la seconde forme de réalisation de l'invention en vue de dessus.
- La figure 8 représente la tubulure de remplissage selon la seconde forme de réalisation de l'invention, dans laquelle le séparateur liquide vapeur est disposé dans la seconde configuration.
- La figure 9 représente la tubulure de remplissage selon la seconde forme de réalisation de l'invention en vue de dessus.
- La figure 10 représente, selon une troisième forme de réalisation de l'invention, une vue schématique en coupe d'une tubulure de remplissage équipée d'un séparateur liquide vapeur disposé dans la première configuration.
- La figure 11 représente la tubulure de remplissage selon la troisième forme de réalisation de l'invention dans laquelle le séparateur liquide vapeur est disposé dans la seconde configuration.
- La figure 12 représente un séparateur liquide vapeur en vue de dessus selon une quatrième forme de réalisation de l'invention.
- La figure 13 représente une vue en coupe B-B du séparateur liquide vapeur selon la quatrième forme de réalisation de l'invention, disposé dans la première configuration.
- La figure 14 représente une vue de côté du piston mobile du séparateur liquide vapeur selon la quatrième forme de réalisation de l'invention.
- La figure 15 représente une vue en coupe B-B du séparateur liquide vapeur selon la quatrième forme de réalisation de l'invention, disposé dans la seconde configuration.
- La figure 16 représente une vue en coupe d'une tubulure de remplissage selon la quatrième forme de réalisation de l'invention placée dans la première configuration.
- La figure 17 représente une vue en coupe d'une tubulure de remplissage selon la quatrième forme de réalisation de l'invention placée dans la seconde configuration.
- La figure 18 représente une vue similaire à la figure 12 d'un séparateur liquide vapeur selon une cinquième forme de réalisation de l'invention.
- La figure 19 représente une vue en coupe selon E-E du séparateur liquide vapeur selon la cinquième forme de réalisation de l'invention disposé dans la première configuration.
- La figure 20 représente une vue en coupe selon E-E du séparateur liquide vapeur selon la cinquième forme de réalisation de l'invention disposé dans la seconde configuration.
- La figure 21 représente une vue en coupe selon C-C du séparateur liquide vapeur selon la cinquième forme de réalisation de l'invention disposé dans la première configuration.

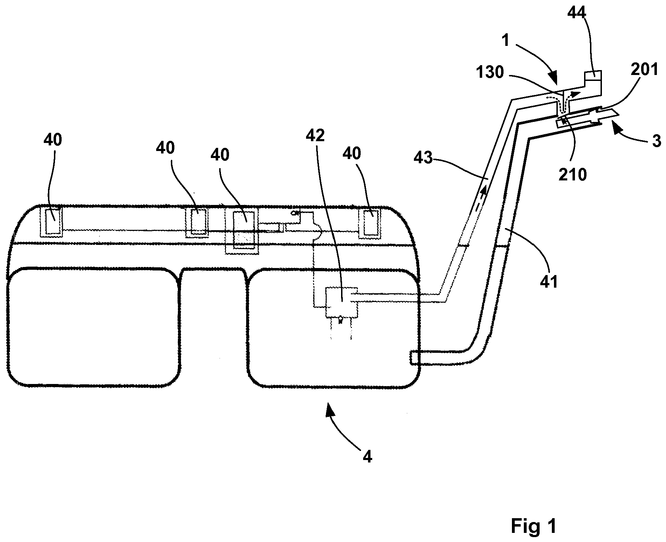

La figure 1 illustre de manière schématique un réservoir de véhicule 4, alimenté en carburant par une tubulure de remplissage 41. La tête 201 de la tubulure de remplissage débouche dans un conduit de réception 200 formant partie de la tubulure de remplissage. La tête 201 est adaptée pour permettre l'introduction d'une canule de remplissage 3. Le réservoir est équipé des organes de surveillance et de sécurité 40 dont les fonctions n'ont pas lieu d'être précisées dans la présente description. Les vapeurs de carburant sont conduites par une tubulure d'évacuation des vapeurs 43 depuis une unité de dégazage 42 vers des moyens de traitement des vapeurs tels qu'un filtre absorbeur des vapeurs d'hydrocarbure 44 (canister) permettant le traitement des vapeurs d'hydrocarbures avant leur réinjection dans le moteur du véhicule.

Les vapeurs de carburant provenant du réservoir sont chargées de gouttelettes susceptibles de réduire le rendement du canister 44. Pour éviter cet inconvénient, il est prévu de placer sur la tubulure d'évacuation des vapeurs 43 un séparateur liquide vapeur 1, permettant de piéger les gouttelettes de carburant, de manière à ne laisser passer que les seules vapeurs en direction du canister 44. Les gouttelettes de carburant sont alors réinjectées dans le réservoir par l'intermédiaire de la tubulure de remplissage 41.

Le séparateur liquide vapeur 1 est disposé en règle générale le plus loin possible en aval de la tubulure 43 d'évacuation des vapeurs, à proximité de l'entrée de la tubulure de remplissage 41, au niveau par exemple du conduit de réception 200 dans lequel pénètre la canule de remplissage 3, et où il est pratique de recueillir les éléments liquides pour les reconduire vers le réservoir. Cette disposition permet également d'interagir mécaniquement avec la tête de ladite canule au moment de son introduction ou de son extraction de manière à modifier l'état des organes lié au séparateur.

Toutefois, moyennant quelques adaptations, il est tout à fait possible, tout en restant dans le cadre de l'invention, d'installer le séparateur liquide vapeur à un endroit quelconque de la tubulure de remplissage 41.

On notera ici que, pour l'ensemble des formes de réalisation de l'invention faisant l'objet de la présente description, le séparateur liquide vapeur 1 monté sur la tubulure de remplissage 41 est connecté à une seule et unique tubulure d'évacuation des vapeurs 43 remontant du réservoir 4.

Comme on le verra en détail par la suite, le séparateur liquide vapeur comprend au moins une paroi 130 placée en travers du flux de vapeur remontant du réservoir, sur laquelle se déposent les gouttelettes de carburant qui retombent alors par gravité dans le conduit de réception 200, et qui sont évacués vers le réservoir par la tubulure de remplissage 41. Les vapeurs de carburant contournent la paroi 130, dans le sens des flèches, avant de se diriger vers le canister 44. Ce trajet supplémentaire imposé aux vapeurs, à la manière d'un labyrinthe, est la source d'une perte de charge supplémentaire dans la tubulure d'évacuation des vapeurs 43, dont les effets peuvent remonter jusqu'au réservoir 4 où l'on observe, dans certaines conditions, une légère surpression.

En mode de fonctionnement courant, la tête 201 de la tubulure de remplissage est fermée. Le flux de vapeur remontant par la tubulure d'évacuation des vapeurs 43 est très faible, et les pressions à l'intérieur du réservoir 4, de la tubulure de remplissage 41 et de la tubulure d'évacuation des vapeurs 43 s'équilibrent sensiblement par l'intermédiaire de la liaison entre la tubulure de remplissage et le séparateur liquide vapeur.

Lors de la phase de remplissage du réservoir, une canule 3 est introduite par la tête 201 dans le conduit de réception 200 de la tubulure de remplissage 41, et le carburant s'écoule à l'intérieur par la tubulure de remplissage 41 vers le réservoir 4. Le débit de vapeurs remontant par la tubulure d'évacuation des vapeurs 43 augmente alors fortement, et pourrait s'échapper vers l'atmosphère par la tête 201 de la tubulure de remplissage 41 qui n'est pas obturée de manière étanche par la canule pendant cette opération. Pour éviter cet inconvénient, il est prévu de refermer le passage entre le séparateur liquide vapeur et la tubulure de remplissage à l'aide d'un clapet 210 dont la fermeture est provoquée par l'introduction de la canule 3. Les vapeurs remontant par la tubulure d'évacuation des vapeurs 43 sont alors forcées de circuler au travers du labyrinthe formé par la paroi 130. La perte de charge imposée par la paroi 130 s'élève alors de manière significative et crée une surpression de quelques millibars dans le réservoir 4. Cette surpression empêche l'évacuation des vapeurs et le carburant remonte dans la tubulure de remplissage 41 et peut, dans certaines circonstances, activer les dispositifs de sécurité placés dans la canule pour prévenir les phénomènes de refoulement, et provoquer l'arrêt du remplissage.

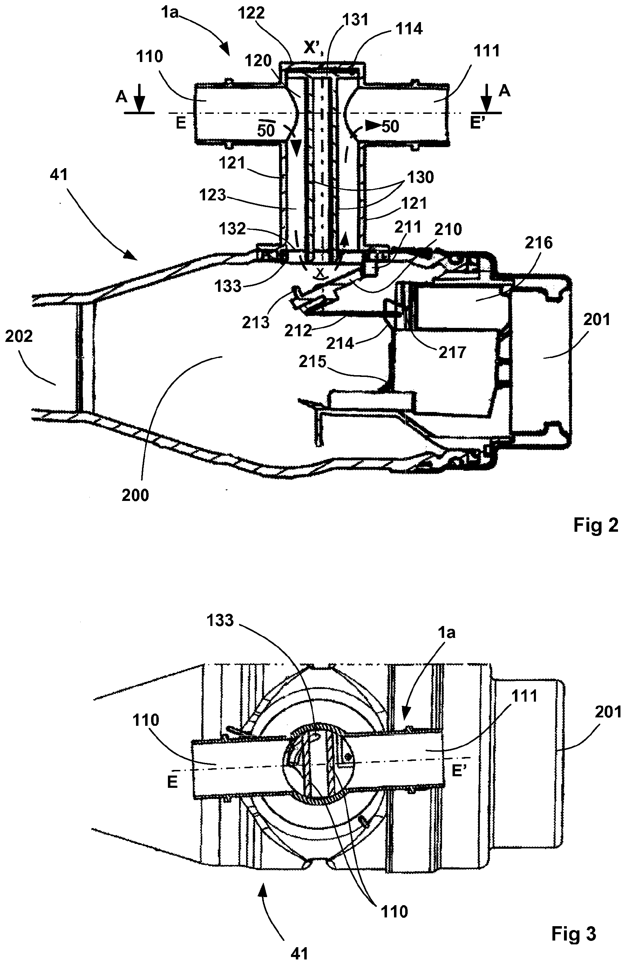

Les figures 2 à 21 permettent de visualiser plusieurs variantes de réalisation de l'invention dont l'objet est de réduire cette perturbation. Dans chacune de ces variantes, les organes assurant les mêmes fonctions sont repérés par les mêmes indices numériques.

La figure 2 représente une tubulure de remplissage 41, selon une première forme de réalisation de l'invention, équipée sur sa partie supérieure d'un séparateur liquide vapeur 1a. La tubulure de remplissage comprend un conduit de réception élargi 200 muni d'une tête 201 adaptée pour recevoir une canule (non représentée). Le conduit de réception se prolonge à sa sortie 202 par la section courante de la tubulure aboutissant au réservoir (non représenté).

La figure 2 illustre le cas dans lequel les parois 130 sont placées dans la première configuration, c'est-à-dire lorsque la tubulure de remplissage est placée dans la configuration de marche du moteur du véhicule, et dans laquelle la tête de la tubulure de remplissage 201 est obturée par un bouchon de réservoir (non représenté).

Le séparateur liquide vapeur 1a comprend un seul et unique conduit d'entrée 110 relié à la tubulure d'évacuation des vapeurs 43 (non représentée) provenant du réservoir. Ce conduit d'entrée 110 débouche dans un corps creux 120 dans lequel sont disposés les moyens de séparation formés d'au moins une paroi et, dans le cas faisant l'objet de la présente description de deux parois 130 placées sensiblement à la verticale, c'est-à-dire perpendiculairement au flux de vapeurs entrant dans le corps creux par le conduit d'entrée 110. Le corps creux 120 est relié à un conduit de sortie 111 par lequel s'échappent les vapeurs en direction du canister. Les parois 130 s'étendent dans le corps creux 120, dont la partie inférieure sert de conduit de drainage 123 débouchant directement dans le conduit de réception 200. Les parois 130 sont maintenues entre elles par un plateau supérieur 131 disposé sous la paroi supérieure 122 du corps creux 120, et sont mobiles en rotation autour d'un axe XX'.

Dans cette première configuration, les parois sont orientées de manière à former un obstacle et à forcer le flux de vapeur provenant du conduit d'entrée 110 à suivre un chemin 50, contournant lesdites parois 130 pour s'évacuer vers le conduit de sortie 111, tel que représenté par la flèche 50 en pointillés. Dans le cas faisant l'objet de la présente description, les parois sont disposées sensiblement à la perpendiculaire de l'axe EE' des conduits 110 et 111, comme cela est illustré à la figure 3, qui est une vue de dessus selon la coupe A-A de l'ensemble formé par le séparateur liquide vapeur 1a et la tubulure de remplissage 41.

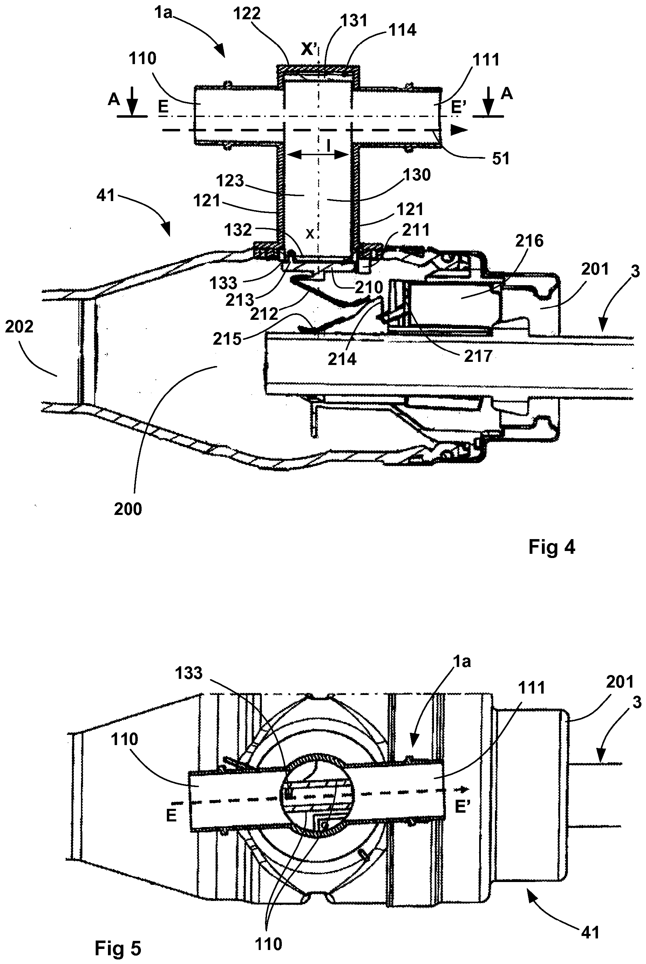

Avantageusement, le corps creux 120 et le conduit de drainage 123 ont une forme sensiblement cylindrique de sorte que, en ajustant la largeur I (voir figure 4) des parois 130 au diamètre intérieur dudit cylindre, les vapeurs provenant du conduit d'entrée 110 n'ont pas d'autre passage possible pour se diriger vers le conduit de sortie 111 que de les contourner par le bas. De la sorte, les gouttelettes de carburant contenues dans les vapeurs se déposent sur les parois 130 ainsi que sur la partie intérieure de la paroi 121 du conduit de drainage 123, et ruissèlent par gravité vers le conduit de réception 200.

La forme de réalisation de l'invention faisant l'objet de la présente description représente un axe XX' vertical. Cette forme préférentielle de réalisation permet de disposer les parois 130 de sorte que les gouttelettes de vapeur s'écoulent par gravité le plus directement possible depuis le conduit de drainage 123 dans le conduit de réception 200. Toutefois, il est possible d'orienter l'axe XX' de manière différente en prenant soin d'aménager en conséquence la forme du conduit de drainage pour éviter que ne se forment des poches non désirées susceptibles d'accumuler du carburant liquide.

Les parois 130 sont également solidaires d'un plateau inférieur 132, dans lequel sont pratiquées des ouvertures pour permettre une libre circulation des vapeurs et des gouttelettes entre le conduit de drainage 123 et le conduit de réception 200.

La tubulure de remplissage, selon cette première forme de réalisation de l'invention possède un clapet 210, monté sur une articulation 211 d'axe sensiblement horizontal, destiné à obturer le passage entre le conduit de drainage 123 et le conduit de réception 200. Le clapet 210 comporte à son extrémité une came 213 destinée à collaborer avec une rampe hélicoïdale 133 aménagée dans le plateau inférieur 132. Une lame élastique 212, destinée à collaborer avec un levier élastique 214, est disposée sous le clapet 210.

Le levier élastique 214, monté sur une platine 216, par l'intermédiaire d'une articulation 217 d'axe horizontal, sensiblement parallèle à l'axe de l'articulation 211 du clapet 210, comporte à son extrémité une palette 215. La palette 215 et le levier élastique 214 peuvent utilement être reliés électriquement à la masse.

Le mouvement de la première configuration vers la seconde configuration se fait sous l'action de l'introduction d'une canule 3 dans la tête 201 de la tubulure de remplissage lorsque le véhicule est rechargé en carburant.

La tête de la canule vient en contact avec la palette 215 et la repousse en faisant tourner le levier élastique 214 autour de son articulation 217. Dans son mouvement, le levier élastique 214 entraine la lame 212 et fait pivoter le clapet 210 autour de l'axe de son articulation 211. La came 213 pénètre dans la rampe hélicoïdale 133, et entraine le plateau inférieur 132, et les parois 130 qui lui sont solidaires, en rotation autour de l'axe XX'.

Lorsque le clapet 210 est en position fermée, les parois 130 ont fait une rotation d'environ 90° pour se placer dans la seconde configuration, comme cela est illustré à la figure 4 et à la figure 5. Les parois 130 sont alors sensiblement parallèles à l'axe EE' des conduits 110 et 111.

On notera ici que les formes de réalisation faisant l'objet de la présente description montrent des conduits d'entrée 110 et de sortie 111 dont les axes sont alignés avec un axe EE', mais qu'il est possible d'arranger les positions respectives des conduits d'entrée et de sortie du corps creux de manières différentes et équivalentes moyennant l'adaptation des organes adjacents.

La continuité électrique entre la canule et le véhicule est assurée par la palette 215 et le levier élastique 214.

Dans cette seconde configuration, le flux de vapeurs, important pendant la phase de remplissage du réservoir, ne rencontre plus l'obstacle formé par les parois 130, et peut se diriger directement depuis le conduit d'entrée 110 vers le conduit de sortie 111, selon un chemin 51, évitant de passer par le labyrinthe formé par les parois 130, et de suivre le chemin 50 des vapeurs lorsque les parois sont disposées selon la première configuration, comme cela est illustré par la flèche 51 en pointillés gras. Les parois 130 ne font plus obstacle à la circulation du flux de vapeurs et définissent un passage direct entre le conduit d'entrée et de sortie. Et même si le passage sous le plateau inférieur 132 reste ouvert, la circulation entre les conduits d'entrée 110 et de sortie 111 présente alors une moindre perte de charge, et permet de diriger les vapeurs vers le canister pendant la phase de remplissage sans provoquer de surpression dans le réservoir. La fermeture du clapet 210 interdit également aux vapeurs de s'échapper dans l'atmosphère par l'intermédiaire de la tête de la tubulure de remplissage 41.

On remarquera que, lorsque les moyens de séparation sont dans la seconde configuration, les gouttelettes de carburant présentes dans le flux de vapeur entrant par le conduit 110, passent directement vers le conduit de sortie 111 et vers le canister 44 en raison de la moindre efficacité de la fonction d'extraction opérée par le séparateur liquide vapeur 1 pendant la phase de remplissage du réservoir. Le pourcentage de gouttelettes extrait du flux de vapeurs lorsque les moyens de séparation sont dans la seconde configuration est donc très inférieur au pourcentage de gouttelettes extrait, pour un flux de vapeurs identique, lorsque les moyens de séparation sont placés dans la première configuration.

Au retrait de la canule, un ressort hélicoïdal de rappel 114 logé dans l'espace compris entre le plateau supérieur 131 et la paroi supérieure 122 du corps creux 120 ramène les parois 130 dans la première configuration illustrée par les figures 2 et 3.

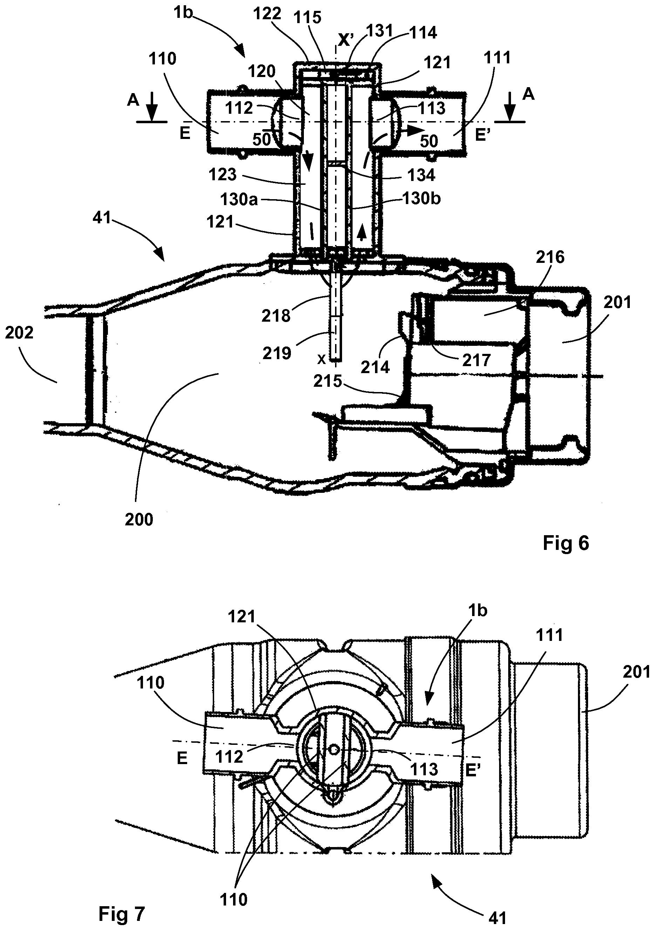

Les figures 6 à 9 illustrent une seconde forme de réalisation de l'invention.

Dans cette variante, la tubulure de remplissage ne comporte plus de clapet venant obturer le passage entre le conduit de drainage 123 et le conduit de réception 200. De même, les parois 130a et 130b ne sont plus reliées par un plateau inférieur.

De la même manière que dans la première forme de réalisation de l'invention, les parois 130a et 130b sont ajustées pour avoir une largeur sensiblement égale au diamètre intérieur du corps creux 120 de forme cylindrique, ainsi que du conduit de drainage 123.

Lorsque le séparateur liquide vapeur 1 b est disposé dans la première configuration, illustrée par les figures 6 et 7, les parois 130a et 130b sont placées sensiblement à la perpendiculaire de l'axe EE' des conduits d'entrée et de sortie 110 et 111, et forment un labyrinthe obligeant le flux de vapeurs provenant du conduit d'entrée 110 et se dirigeant vers le conduit de sortie à suivre un chemin 50 (voir la flèche 50 en pointillés) contournant lesdites parois, de sorte que les gouttelettes présentes dans les vapeurs s'écoulent par gravité dans le conduit de drainage 123 vers le conduit de réception 200.

Le mouvement de rotation des parois 130a et 130b autour de l'axe XX' pour passer de la première configuration vers la seconde configuration est réalisé par un mécanisme 115 logé entre le plateau supérieur 131 et la paroi supérieure 122 du corps creux 120. Ce mécanisme est entrainé en rotation par un flap 219 disposé à l'extrémité d'un arbre décentré 218 d'axe vertical parallèle à l'axe XX'. Le flap 219 est judicieusement placé sur le trajet de la tête de la canule 3, de sorte que le mouvement d'introduction de cette dernière dans le conduit de réception 200 provoque la rotation du flap 219 et de l'arbre décentré 218, ainsi que la rotation du plateau supérieur supportant les parois 130a et 130b par l'intermédiaire du mécanisme 115. L'arbre 218 est décentré de manière à ne pas venir en contact avec la tête de la canule 3. Préférentiellement, l'axe XX' est disposé verticalement pour les mêmes raisons que celles qui ont déjà été explicitées ci-dessus.

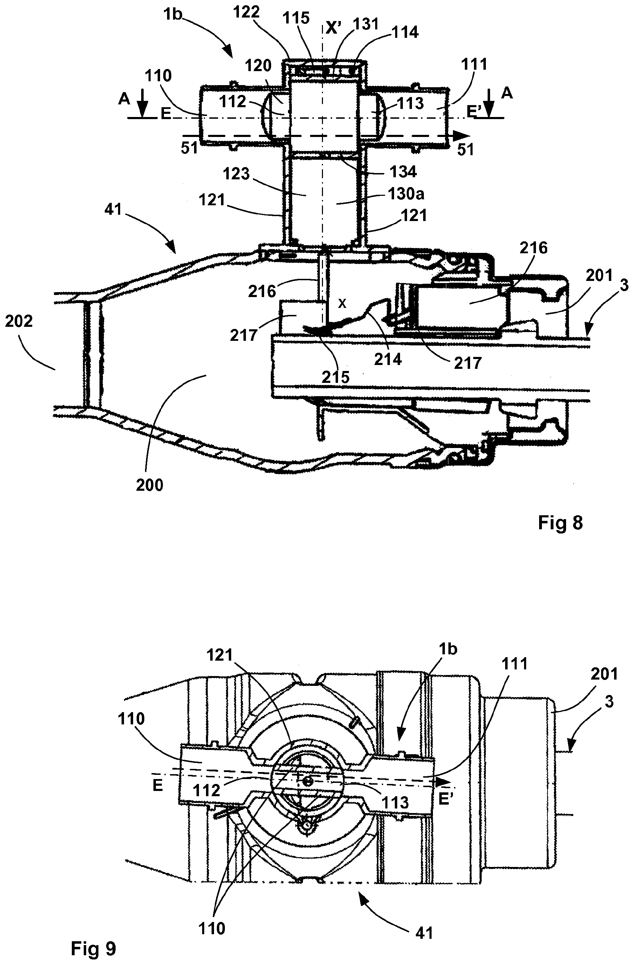

Les figures 8 et 9 permettent de visualiser la tubulure de remplissage 41 et le séparateur liquide vapeur 1b selon cette seconde forme de réalisation de l'invention dans la seconde configuration, dans laquelle une canule de remplissage 3 est introduite par la tête 201 de la tubulure de remplissage dans le conduit de réception 200. Sous l'action du mouvement du flap 219, les parois 130a et 130b ont pivoté d'environ 90° autour de l'axe XX' et sont maintenant orientées selon une direction sensiblement parallèle à l'axe EE' des conduits d'entrée et de sortie 110 et 111.

En référence maintenant à la figure 9, dans laquelle le séparateur liquide vapeur 1b est placé dans la seconde configuration, on observe que les conduits d'entrée et de sortie 110 et 111 sont aménagés de sorte que la section de leurs intersections, respectivement 112 et 113, avec la paroi 122 du corps creux 120 sont incluses dans l'espace séparant les deux parois 130a et 130b. De la sorte, lorsque les parois sont dans la seconde configuration, les vapeurs provenant du réservoir par l'unique conduit d'entrée 110 sont forcées de circuler entre les deux parois 130a et 130b pour atteindre le conduit de sortie 111.

Une cloison d'isolation 134, disposée verticalement en dessous des sections d'entrée 112 et 113, relie les deux parois 130a et 130b entre elles, et permet d'interdire la circulation des vapeurs vers le conduit de réception 200 pendant la phase de remplissage lorsque les parois 130a et 130b sont disposées dans la seconde configuration.

Ainsi, lorsque le séparateur liquide vapeur 1 est dans la seconde configuration, et de manière similaire à la première forme de réalisation de l'invention, les vapeurs passent directement du conduit d'entrée 110 vers le conduit de sortie 111, en traversant le passage intérieur compris entre le plateau supérieur 131, la cloison 134 et les deux parois 130a et 130b. Cet espace est isolé du conduit de drainage 123. En ajustant judicieusement l'écartement entre les deux parois 130a et 130b il est facile de réduire la perte de charge entre le conduit d'entrée et de sortie et d'éviter les surpressions dans le réservoir de carburant.

Lorsque la canule 3 est retirée du conduit de réception 200 de la tubulure de remplissage 41, la palette 217 est libérée, un ressort hélicoïdal de rappel 114, disposé dans l'espace situé entre le plateau supérieur 131 et la paroi supérieure 122 du corps creux 120, entraine les parois 130a et 130b, ainsi que la palette 217, de la seconde configuration vers la première configuration.

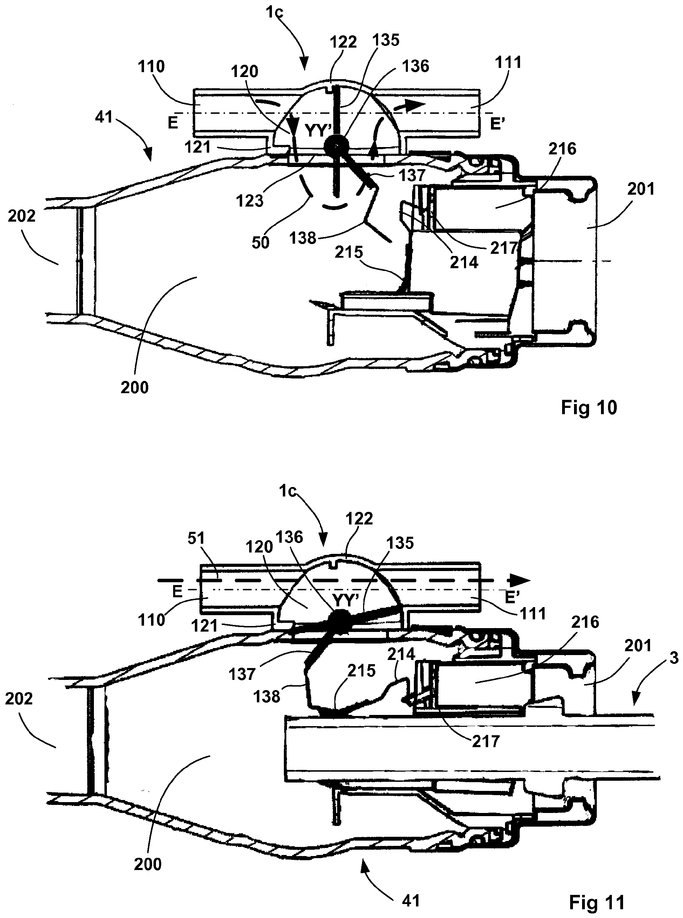

Les figures 10 et 11 illustrent une troisième forme de réalisation de l'invention dans laquelle le séparateur liquide vapeur 1c comprend une paroi 135 pivotant autour d'une articulation 136 d'axe YY'. Cet axe YY' est disposé, dans le cadre de l'exemple faisant l'objet de la présente description, sensiblement à la perpendiculaire de l'axe EE' des conduits 110 et 111.

Préférentiellement l'axe YY' est disposé horizontalement. Cette forme de réalisation permet de disposer les parois du corps creux de sorte que les gouttelettes de vapeur s'écoulent par gravité le plus directement possible dans le conduit de réception 200. De manière similaire à ce qui a été déjà indiqué, il est possible d'orienter l'axe YY" de manière différente en prenant soin d'aménager en conséquence la forme du corps creux pour éviter que ne se forment des poches non désirées susceptibles d'accumuler du carburant liquide.

Lorsque le séparateur 1c est placé dans la première configuration, comme cela est illustré à la figure 10, la paroi 135 obstrue le passage entre le conduit d'entrée 110 et le conduit de sortie 111 en formant un labyrinthe. Les vapeurs de carburant se dirigeant vers le conduit de sortie 111 suivent un chemin 50 contournant ladite paroi 135, comme cela est illustré par la flèche 50 en pointillés gras de la figure 10. Les gouttelettes de carburant s'écoulent alors par gravité le long de la paroi 135 en direction du conduit de réception 200.

La paroi 135 supporte une extension 137, prolongée par une lame élastique 138.

L'articulation 136 est disposée verticalement en dessous de la section de l'intersection des conduits 110 et 111 avec la paroi 121 du corps creux 120, de sorte que la rotation de la paroi 135 autour de l'axe YY' vient fermer le passage entre le corps creux 120 et le conduit de drainage 123, et place la paroi 135 dans la seconde configuration comme cela est illustré à la figure 11. Dans cette seconde configuration, en phase de remplissage du réservoir, les vapeurs en provenance du conduit d'entrée 110 suivent un chemin 51 distinct du chemin suivi dans la première configuration et passent directement du conduit d'entrée 110 vers le conduit de sortie 111 en traversant le passage définit par le corps creux avec une perte de charge réduite de manière à ne pas créer de surpression dans le réservoir. Les vapeurs ne peuvent pas non plus retourner vers le conduit de réception 200.

On observera à ce stade qu'il serait tout à fait possible d'installer dans les séparateurs selon la seconde (1b) et la troisième (1c) forme de réalisation de l'invention un clapet 120 disposé entre le conduit de drainage 123 et le conduit de réception 200, du type de celui prévu dans le séparateur (1a) selon la première forme de réalisation de l'invention. Cet ajout ne semble néanmoins pas nécessaire dans la mesure où les parois 130a, 130b ou 135 assurent de manière simple et économique la fonction de séparation entre le chemin de circulation des gaz et le conduit de réception 200 pendant la phase de remplissage, permettant ainsi d'éviter leur fuite dans l'atmosphère.

Lors de l'introduction de la canule 3, la tête de la canule 3 repousse la palette 215 et fait basculer le levier élastique 214 autour de son articulation 217 de sorte que la palette 215 engage le levier élastique 138 situé dans le prolongement de l'extension 137, et entraine la paroi 135 en rotation autour de l'axe YY'.

Le conduit de drainage 123 situé entre le corps creux et le conduit de réception 200 a une hauteur réduite de manière à permettre au levier élastique 138 de collaborer simplement avec la palette 215, si bien que la partie inférieure de la paroi 135 plonge en partie dans le conduit 200 lorsque la paroi 135 est placée dans la première configuration.

Dans cette troisième forme de réalisation de l'invention, le corps creux prend alors la forme générale d'un cylindre d'axe YY', ou encore d'une demi-sphère dont un diamètre passe par l'axe YY' de l'articulation 136. L'axe YY' se situe donc dans un plan équatorial dudit corps creux. Et la paroi 135 prend respectivement une forme rectangulaire ou circulaire similaire à une section équatoriale intérieure dudit corps creux.

La forme de la section du passage entre le corps creux 120 et le conduit de drainage 123 est alors similaire à la forme de la paroi, de manière à obtenir une fermeture étanche lorsque la paroi 135 est dans la seconde configuration.

Un ressort hélicoïdal (non visible) placé autour de l'articulation 136 permet de ramener la paroi 135 de la seconde configuration vers la première configuration lorsque la canule 3 est retirée du conduit de réception 200.

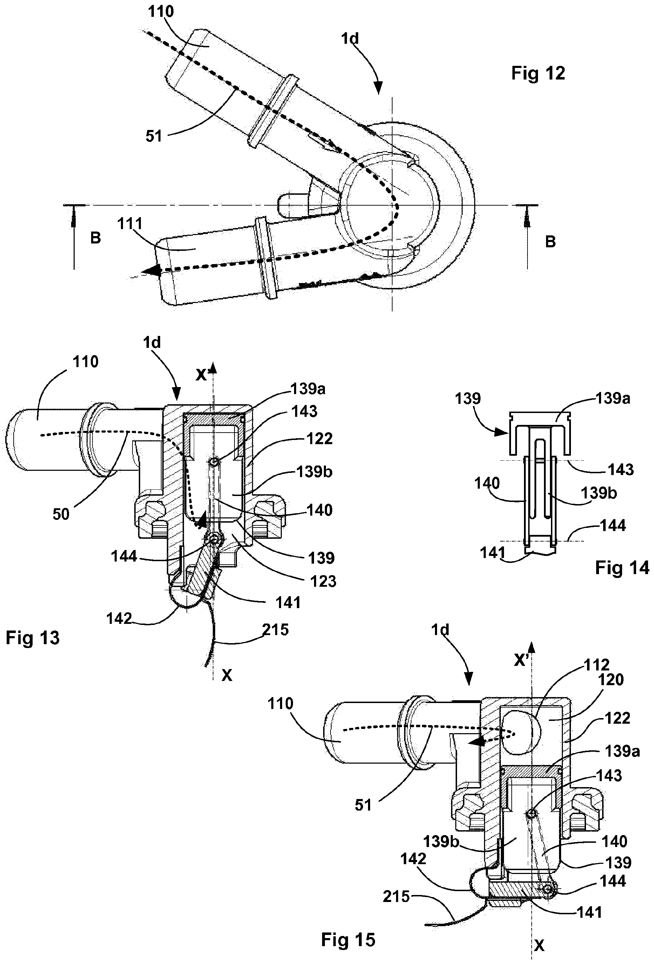

Les figures 12 à 17 permettent d'illustrer une quatrième forme de réalisation de l'invention, dans laquelle la paroi mobile des moyens de drainage du séparateur liquide vapeur 1d se déplace en translation selon un axe XX', préférentiellement orienté verticalement.

La figure 12 représente une vue de dessus du séparateur liquide vapeur dans lequel l'axe du circuit d'entrée des vapeurs 110 n'est pas aligné avec l'axe du circuit de sortie 111.

La figure 13 est une vue en coupe selon B-B du séparateur liquide vapeur représenté à la figure 12 et disposé dans la première configuration.

Ce séparateur liquide vapeur comprend un piston mobile 139, visible en détail à la figure 14, et se déplaçant dans le corps creux 120 de forme sensiblement cylindrique d'axe XX'. L'axe XX' est orienté préférentiellement selon la direction verticale.

Le piston mobile comprend une tête 139a dont la section droite correspond à la section droite du corps creux. La tête du piston 139a se prolonge dans sa partie inférieure par une paroi 139b qui s'étend sensiblement perpendiculairement au conduit d'entrée des vapeurs 110.

Le piston mobile est entrainé en mouvement par une bielle 140 articulée par un axe 143 à la paroi mobile 139b. Cette bielle est elle-même accouplée à un bras d'entrainement 141 par un axe de liaison 144. Le bras d'entrainement 141 est lié à une palette 215 et à un ressort de rappel 142.

Lorsque le séparateur liquide vapeur est disposé dans la première configuration, le ressort de rappel 142 fait pivoter le bras d'entrainement en position verticale et, sous l'action de la bielle 140, fait remonter le piston mobile 139 dans la partie haute du corps creux 120.

Dans cette première configuration, le corps creux 120 est arrangé pour que la tête 139a du piston mobile soit disposée au-dessus des sections d'intersection 112 et 113 des conduits d'entrée 110 et de sortie 111 avec le corps creux 120. La paroi 139b du piston mobile forme alors avec les parois 122 du corps creux 120 un labyrinthe dans lequel est forcé de circuler le flux de vapeur provenant du conduit d'entrée 110 et se dirigeant vers le conduit de sortie 111 en suivant le chemin 50 visualisé en lignes pointillées à la figure 13.

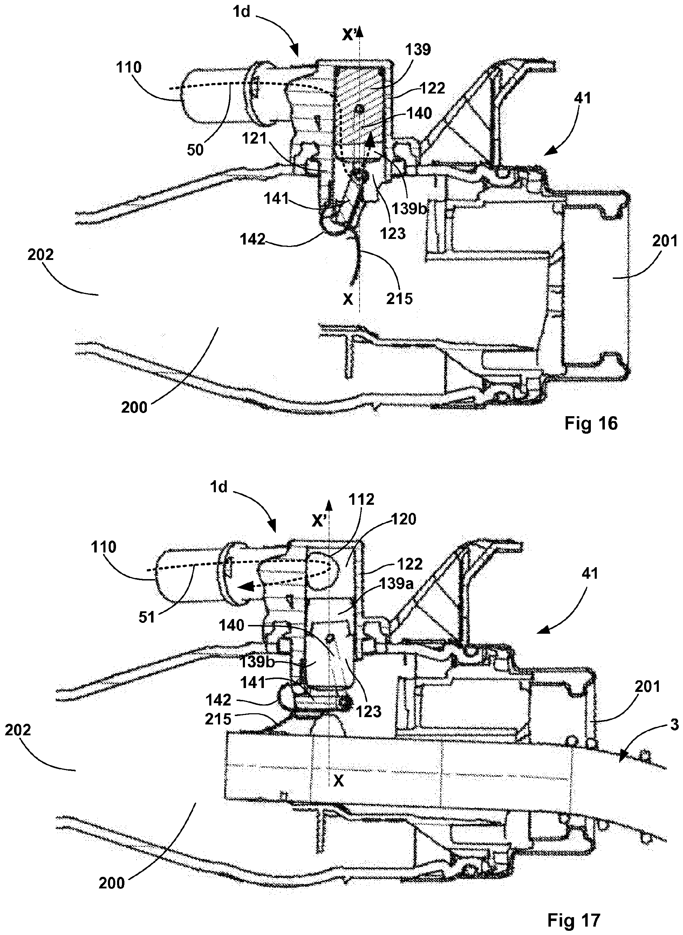

Les gouttelettes s'écoulent alors par gravité par le conduit de drainage 123 dans le conduit de réception 200 de la tubulure de remplissage 41, comme cela est représenté à la figure 16 illustrant une tubulure de remplissage 41 comportant un séparateur liquide vapeur 1d selon la quatrième forme de réalisation de l'invention, disposé selon la première configuration.

Lorsque les moyens de drainage sont disposés dans la seconde configuration, comme cela est représenté à la figure 15, la palette 215 est repoussée sous l'action par exemple de l'introduction d'une canule de remplissage 3. Le bras d'entrainement 141 est basculé en position horizontale et entraine vers le bas le piston mobile 139 par l'intermédiaire de la bielle 140.

La tête 139a du piston mobile 139 se trouve alors placée en dessous des sections d'intersection 112 et 113 des conduits d'entrée 110 et de sortie 111 du flux de vapeurs, de sorte que les conduits d'entrée 110 et de sortie 111 sont isolés du conduit de drainage 123, comme cela est représenté à la figure 17. Le flux de vapeur circule alors directement depuis le conduit d'entrée 110 vers le conduit de sortie 111 par le passage intérieur du corps creux, en suivant un chemin 51 évitant quasiment la totalité du chemin 50, parcouru lorsque le piston mobile est disposé dans la première configuration.

La section de ce passage est égale à la section du corps creux. La perte de charge subie par un flux de vapeurs circulant entre les conduits d'entrée et de sortie, lorsque les moyens de séparation sont disposés dans la seconde configuration, est alors très inférieure à la perte de charge subie par ce même flux de vapeurs lorsque les moyens de séparation sont disposés dans la première configuration.

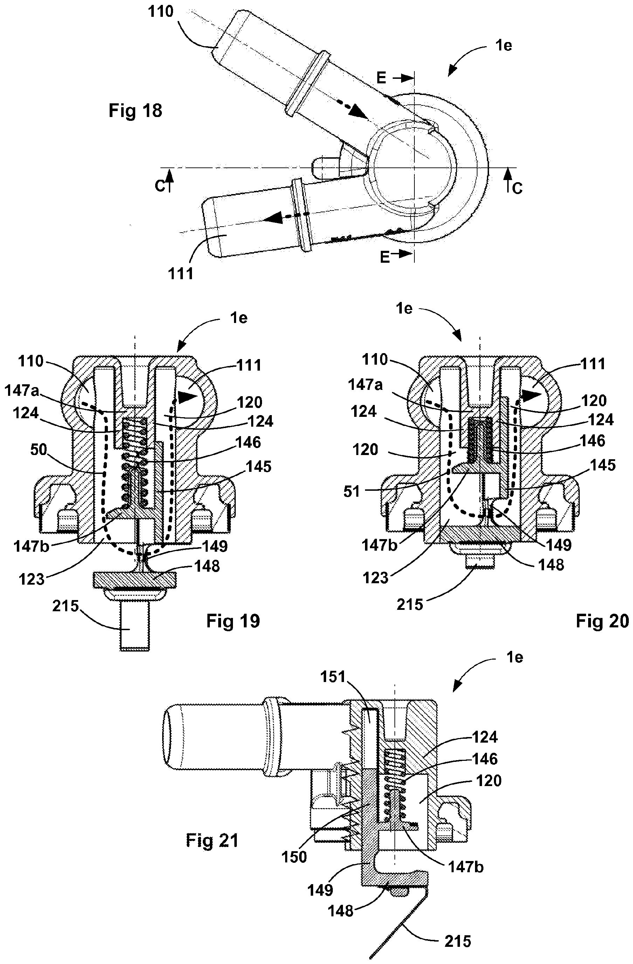

Les figures 18 à 21 illustrent une cinquième forme de réalisation de l'invention dans laquelle les moyens de séparation sont formés par une simple paroi mobile se déplaçant en translation le long d'une direction XX'.

La figure 18 représente en vue de dessus le séparateur liquide vapeur dans lequel les conduits d'entrée 110 et de sortie 111 forment un angle obtus.

Les figures 19 et 20 représentent une vue en coupe selon E-E dudit séparateur placé successivement dans la première puis la seconde configuration.

Le séparateur liquide vapeur comprend au moins une cloison fixe 124, s'étendant verticalement depuis la partie supérieure du corps creux, et contre laquelle coulisse suivant la direction XX' une paroi mobile 145 parallèle à la paroi 124. Préférentiellement, la direction est verticale.

Dans la première configuration, la paroi mobile 145 est disposée dans la partie inférieure du corps creux de sorte que les parois 124, rallongées de la hauteur de la paroi mobile 145, forment un labyrinthe dans lequel le flux de vapeurs provenant du conduit d'entrée 110 et se dirigeant vers le conduit de sortie est forcé de circuler selon un premier chemin 50.

Dans la seconde configuration, la paroi mobile 145 est remontée dans la partie supérieure du corps creux, de sorte que la paroi 145 vient recouvrir tout ou partie de la paroi 124. Le labyrinthe formé par les parois 124 et 145 définit un chemin 51 raccourci par lequel circule le flux de vapeur provenant du conduit d'entrée 110 et se dirigeant vers le conduit de sortie. Le passage entre le conduit d'entrée et le conduit de sortie étant plus court que dans la première configuration, les pertes de charge entre le conduit d'entrée et le conduit de sortie sont alors réduites.

La paroi 145 est reliée à un plateau support inférieur 147b sur lequel prend appui un ressort 146 venant en butée contre un plateau support supérieur 147a solidaire des deux parois 124.

Le plateau support inférieur est relié par un pied de liaison 149 à un obturateur 148 supportant une palette 215.

Sous l'action d'introduction d'une canule 3 (non visible), la palette 215 est soulevée verticalement et entraine le mouvement de translation vers le haut de la paroi 145 et de l'obturateur 148. Le ressort 146 est mis en compression.

L'obturateur 148 vient alors fermer la communication entre le conduit de drainage 123 et le conduit de réception 200 (non visualisé). Le séparateur liquide vapeur 1e est alors disposé dans la seconde configuration illustrée par la figure 20.

Lors du retrait de la canule, le ressort 146 fait descendre la cloison 145 vers le bas du corps creux en repoussant le plateau inférieur 147b et l'obturateur 148, de manière à replacer le séparateur liquide vapeur dans la première configuration illustrée par la figure 19.

Afin d'assurer un guidage parfait de la cloison 145 et de l'obturateur 148 selon la direction verticale XX', le plateau support inférieur 147b est relié à un doigt de guidage 150, prolongeant le pied de liaison 149, et coulissant dans un guide 151 aménagé dans une paroi du corps creux 120, comme cela est illustré à la figure 21.

Le procédé de remplissage d'un réservoir selon l'invention comprend alors les étapes au cours desquelles :
- on place les moyens de séparation dans la seconde configuration en introduisant une canule dans le conduit de réception de la tubulure de remplissage, de sorte que les vapeurs provenant du réservoir passent directement vers les moyens de traitement des vapeurs pendant la phase de remplissage et,
- on replace les moyens de séparation dans la première configuration en retirant la canule du conduit de la tubulure de remplissage, de sorte que les vapeurs provenant du réservoir passent par lesdits moyens de séparation avant de se diriger vers lesdits moyens de traitement des vapeurs.

Les cinq modes de réalisation de l'invention servant de base à la présente description ne sont pas limitatifs, pour autant qu'ils permettent d'obtenir les effets tels que décrits et revendiqués.

Dans toute la description et les revendications, on considère que le séparateur liquide vapeur est orienté comme sur les figures, à savoir avec un axe vertical et des conduits d'entrée et de sortie horizontaux. On se réfère aux directions verticale et horizontale en tenant compte de cette orientation du séparateur liquide vapeur, qui est la plus propice à l'évacuation des gouttelettes par le conduit de drainage, lequel est alors vertical. Toutefois, on ne sortirait pas du cadre de l'invention si le séparateur liquide vapeur se trouvait incliné, en raison notamment de la position effective de la tubulure dans un véhicule automobile et de la place disponible autour de la tubulure. Dans ce cas, la verticale peut s'entendre comme la direction longitudinale du corps creux du séparateur et l'horizontale comme la direction du conduit d'entrée lorsqu'il débouche dans le corps creux.

### NOMENCLATURE DES INDICES NUMERIQUES UTILISES

1, 1a, 1b, 1c, 1d, 1e Séparateur Liquide Vapeur
110 Conduit d'entrée du flux de vapeurs provenant du réservoir de carburant
111 Conduit de sortie du flux de vapeurs vers le canister
112 Section de l'intersection du conduit d'entrée avec la paroi du corps creux
113 Section de l'intersection du conduit de sortie avec la paroi du corps creux
114 Ressort de rappel
115 Mécanisme d'entrainement en rotation du plateau supérieur
120 Corps creux
121 Parois du conduit de drainage
122 Parois du corps creux
123 Conduit de drainage
124 Moyens de séparation parois fixes
130 Moyens de séparation ; Paroi mobile autour d'un axe de rotation vertical (XX')
130a, 130b Moyens de séparation ; Parois mobiles autour d'un axe de rotation vertical (XX')
131 Plateau supérieur
132 Plateau inférieur
133 Rampe hélicoïdale
134 Cloison d'isolation
135 Moyens de séparation ; Paroi mobile autour d'un axe de rotation horizontal (YY')
136 Articulation de la paroi mobile d'axe horizontal (YY')
137 Extension
138 Lame élastique de l'extension
139 Piston mobile
139a Tête du piston mobile
139b Moyens de séparation ; Paroi du piston mobile
140 Bielle
141 Bras d'entrainement de la bielle
142 Ressort de rappel du bras d'entrainement de la bielle
143 Axe de liaison entre la paroi du piston mobile et la bielle
144 Axe de liaison entre le bras d'entrainement et la bielle
145 Moyens de séparation ; Paroi mobile
146 Ressort de rappel de la paroi mobile
147a Plateau support supérieur
147b Plateau support inférieur
148 Obturateur
149 Pied de liaison
150 Doigt de guidage
151 Guide
200 Conduit de réception de la tubulure
201 Tête de la tubulure de remplissage vers le conduit de réception
202 Sortie du conduit de réception de la tubulure de remplissage
210 Clapet
211 Articulation du clapet 210
212 Lame élastique du clapet
213 Came
214 Levier élastique
215 Palette
216 Platine
217 Articulation du levier élastique
218 Arbre décentré
219 Flap
3 Canule de remplissage de carburant
4 Réservoir de carburant
40 Instrumentation du réservoir de carburant
41 Tubulure de remplissage de carburant
42 Dégazeur
43 Tubulure d'évacuation des vapeurs de carburant
44 Moyens de traitement des vapeurs ; Canister
50 Chemin des gaz dans la première configuration
51 Chemin des gaz dans la seconde configuration

## Revendications

1. Tubulure de remplissage (41) d'un réservoir de carburant (4) comprenant un conduit de réception (200) destiné à recevoir une canule de remplissage (3), et un séparateur liquide vapeur (1a, 1b, 1c, 1d, 1e), comprenant un corps creux (120) dans lequel débouchent un unique conduit d'entrée d'un flux de vapeurs (110) provenant du réservoir de carburant (4), un conduit de drainage (123) s'écoulant dans le conduit de réception (200), et un conduit de sortie des vapeurs (111), ledit corps creux (120) contenant des moyens de séparation (130, 130a, 130b, 135, 139, 145) permettant d'extraire des gouttelettes présentes dans le flux de vapeurs de manière à ce qu'elles s'écoulent dans le conduit de drainage (123),
**caractérisé en ce que** les moyens de séparation comprennent au moins une paroi mobile (130, 130a, 130b, 135, 139b, 145) entre une première et une seconde configuration, de sorte que,
- dans la première configuration, la paroi mobile (130, 130a, 130b, 135, 139b, 145) est disposée sensiblement verticalement et forme avec des parois (122) du corps creux (120) un labyrinthe dans lequel le flux de vapeurs passant du conduit d'entrée (110) vers le conduit de sortie (111) est forcé de circuler selon un chemin (50) donné contournant ladite paroi, de sorte que des gouttelettes de carburant contenues dans les vapeurs se déposent sur la paroi mobile (130) et ruissellent par gravité vers le conduit de réception (200), et que,
- dans la seconde configuration, la paroi mobile (130, 130a, 130b, 135, 139b, 145) est disposée de manière à définir un passage dans lequel circule le flux de vapeurs du conduit d'entrée (110) vers le conduit de sortie (111) selon un chemin (51) évitant tout ou partie du chemin (50) parcouru par lesdites vapeurs lorsque la paroi mobile est dans la première configuration, la section dudit passage étant aménagée de sorte que la perte de charge subie par le flux de vapeurs circulant dans le corps creux entre le conduit d'entrée (110) et le conduit de sortie (111) est strictement inférieure à celle subie par un même flux de vapeurs lorsque la paroi mobile est dans la première configuration.

2. Tubulure de remplissage (41) selon la revendication 1, dans lequel les moyens de séparation du séparateur liquide vapeur (1a, 1b) comprennent au moins une paroi mobile (130, 130a, 130b) en rotation autour d'un axe (XX") préférentiellement vertical.

3. Tubulure de remplissage (41) selon la revendication 2, dans laquelle le corps creux (120) du séparateur liquide vapeur (1a, 1b) a la forme générale d'un cylindre, de même axe que l'axe de rotation de la paroi mobile (XX'), et une section circulaire dont le diamètre intérieur est sensiblement égal à une largeur (I) de ladite paroi mobile (130, 130a, 130b).

4. Tubulure de remplissage (41) selon la revendication 2 ou la revendication 3, dans laquelle les moyens de séparation (130) du séparateur liquide vapeur (1b) comprennent deux parois mobiles (130a, 130b), disposées de sorte que, lorsqu'elles sont placées dans ladite seconde configuration, des sections de l'intersection (112, 113) du conduit d'entrée (110) et du conduit de sortie (111) avec le corps creux (120) sont incluses dans un espace situé entre les deux parois mobiles (130a, 130b).

5. Tubulure de remplissage (41) selon la revendication 4, comprenant en outre une cloison d'isolation (134), reliant entre elles les deux parois mobiles (130a, 130b), et disposée de sorte que, lorsque les parois mobiles (130a, 130b) sont placées dans la seconde configuration, le conduit d'entrée (110) et le conduit de sortie (111) communiquent par un passage, isolé du conduit de drainage (123),et compris entre les deux parois mobiles (130a, 130b) et situé entre un plateau supérieur (131) et la cloison d'isolation (134).

6. Tubulure de remplissage (41) selon l'une des revendications 1 à 5, comprenant un clapet mobile (210) entre une position ouverte laissant libre le passage entre le conduit de drainage (123) et le conduit de réception (200) lorsque les moyens de séparation (130) sont dans la première configuration, et une position fermée obturant la communication entre le conduit de drainage (123) et le conduit de réception (200) lorsque les moyens de séparation (130) sont dans la seconde configuration.

7. Tubulure de remplissage (41) selon la revendication 1, dans laquelle les moyens de séparation (130) du séparateur liquide vapeur (1c) comprennent au moins une paroi (135) mobile en rotation autour d'un axe préférentiellement horizontal (YY').

8. Tubulure de remplissage (41) selon la revendication 7, dans laquelle :
- dans ladite première configuration la paroi mobile (135) du séparateur liquide vapeur (1c) est disposée sensiblement perpendiculairement au flux de vapeurs **entrant par le conduit d'entrée (110)**dans le corps creux (120),
- dans ladite deuxième configuration, la paroi mobile (135) du séparateur liquide vapeur (1c) est disposée de sorte que le conduit d'entrée (110) et le conduit de sortie (111) sont isolés du conduit de drainage (123).

9. Tubulure de remplissage (41) selon la revendication 7 ou la revendication 8, dans laquelle le corps creux (120) du séparateur liquide vapeur (1c) a une forme sensiblement cylindrique ou hémisphérique, et dans lequel la paroi mobile (135) pivote autour d'un axe (YY') situé dans un plan équatorial du corps creux (120) et a une forme similaire à une section équatoriale intérieure dudit corps creux (120).

10. Tubulure de remplissage (41) selon la revendication 1, dans laquelle les moyens de séparation (139b, 145) du séparateur liquide vapeur (1d, 1e) sont mobiles en translation le long **d'une direction** verticale (XX').

11. Tubulure de remplissage (41) selon la revendication 10, dans laquelle le corps creux (120) a une forme sensiblement cylindrique et dans laquelle les moyens de séparation comprennent un piston mobile (139) en translation à l'intérieur du corps creux le long d'un axe préférentiellement vertical (XX'), comprenant une tête (139a) dont la section correspond à la section intérieure du corps creux (120), et une paroi (139b) s'étendant sous ladite tête (139a) sensiblement perpendiculairement au flux de vapeurs entrant dans **le corps creux par le conduit d'entrée (110),** de sorte que :
- dans la première configuration, des sections d'intersection (112, 113) des conduits d'entrée (110) et de sortie (111) avec le corps creux (120) sont disposées en dessous de la tête (139a) du piston mobile (139), de manière à ce que la paroi (139b) du piston mobile (139) forme avec les parois du corps creux (120) un labyrinthe dans lequel le flux de vapeur (50) provenant du conduit d'entrée (110) et se dirigeant vers le conduit de sortie (111) est forcé de circuler,
- dans la seconde configuration, lesdites sections d'intersection (112, 113) des conduits d'entrée (110) et de sortie (111) avec le corps creux (120) (120), sont disposées au-dessus de la tête (139a) du piston mobile (139) de manière à isoler le conduit d'entrée (110) et le conduit de sortie (111) du conduit de drainage (123).

12. Tubulure de remplissage (41) selon la revendication 10, dans laquelle les moyens de séparation comprennent au moins une paroi fixe (124) s'étendant depuis la partie supérieure du corps creux dans une direction sensiblement perpendiculaire au flux de **vapeurs entrant dans le corps creux par le conduit d'entrée (110),** paroi fixe le long de laquelle coulisse une paroi mobile (145) parallèle à la paroi fixe (124), de sorte que :
- dans la première configuration, la paroi mobile (145) est disposée dans le prolongement de la paroi fixe (124) afin que le flux de vapeurs circule du conduit d'entrée (110) vers le conduit de sortie (111) selon un chemin donné,
- dans la seconde configuration, la paroi mobile (145) se superpose à la paroi fixe (124) afin le flux de vapeurs circule du conduit d'entrée (110) vers le conduit de sortie (111) selon un chemin plus court que dans la première configuration.

13. Tubulure de remplissage (41 selon la revendication 12, dans laquelle la paroi mobile (145) est reliée par l'intermédiaire d'un pied de liaison (149) à un obturateur (148) de sorte que, lorsque la paroi mobile (145) est disposée dans la première configuration, l'obturateur (148) laisse ouvert le passage entre le conduit de drainage (123) et le conduit de réception (200), et lorsque la paroi mobile (145) est disposée dans la seconde configuration, l'obturateur (148) ferme le passage entre le conduit de drainage (123) et le conduit de réception (200).

14. Tubulure de remplissage (41) selon l'une des revendications 1 à 14, comprenant en outre des moyens (115, 133, 137, 138, 210, 213, 214, 215, 218, 219, 140, 141) pour activer le passage du séparateur liquide vapeur (1a, 1b, 1c, 1d, 1e) de la première configuration à la deuxième configuration sous l'action d'introduction de la canule (3) dans le conduit de réception (200) de la tubulure de remplissage (41).

15. Tubulure de remplissage (41) selon l'une des revendications 1 à 14, dans laquelle le séparateur liquide vapeur (1a, 1b, 1c, 1d, 1e) comprend des moyens élastiques (114, 142, 146) pour engendrer le passage du séparateur liquide vapeur (1a, 1b, 1c, 1d, 1e) de la deuxième configuration à la première configuration, lorsque la canule (3) est retirée du conduit de réception (200) de la tubulure de remplissage (41).

## Patentansprüche

1. Füllstutzen (41) für einen Brennstofftank (4) aufweisend eine Aufnahmeleitung (200), die zum Aufnehmen einer Füllkanüle (3) bestimmt ist, und einen Flüssigkeits-Dampfabscheider (1a, 1b, 1c, 1d, 1e), der einen Hohlkörper (120) aufweist, in dem eine einzige Leitung zum Einlassen (110) eines aus dem Brennstofftank (4) kommenden Dämpfestroms, eine Entwässerungsleitung (123), die in die Aufnahmeleitung (200) abfließt, und eine Leitung zum Auslassen der Dämpfe (111) ausmünden, wobei der Hohlkörper (120) Abscheidemittel (130, 130a, 130b, 135, 139, 145) aufweist, die das Entziehen von Tröpfchen, die in dem Dämpfestrom vorhanden sind, in der Form gestatten, dass sie in die Entwässerungsleitung (123) abfließen,
**dadurch gekennzeichnet, dass** die Abscheidemittel wenigstens eine Wand (130, 130a, 130b, 135, 139b, 145) aufweisen, die zwischen einer ersten und einer zweiten Stellung so beweglich ist, dass,
- in der ersten Stellung die bewegliche Wand (130, 130a, 130b, 135, 139b, 145) im Wesentlichen vertikal angeordnet ist und mit den Wänden (122) des Hohlkörpers (120) ein Labyrinth bildet, in dem der Dämpfestrom, der von der Einlassleitung (110) zu der Auslassleitung (111) hin fließt, gezwungen wird, entsprechend einem bestimmten Pfad (50), der die Wand umrundet, so zu zirkulieren, dass Brennstofftröpfchen, die in den Dämpfen vorhanden sind, sich auf der beweglichen Wand (130) absetzen und schwerkraftbedingt zu der Aufnahmeleitung (200) hin triefen, und dass,
- in der zweiten Stellung die bewegliche Wand (130, 130a, 130b, 135, 139b, 145) in der Form angeordnet ist, dass sie einen Durchlass ausbildet, in dem der Dämpfestrom von der Einlassleitung (110) zu der Auslassleitung (111) hin entsprechend einem Pfad (51) zirkuliert, der den Pfad (50), der von den Dämpfen durchlaufen wird, wenn die bewegliche Wand in der ersten Stellung ist, ganz oder teilweise vermeidet, wobei der Querschnitt des Durchlasses so vorgesehen ist, dass der Lastverlust, der von dem Dämpfestrom erlitten wird, der in dem Hohlkörper zwischen der Einlassleitung (110) und der Auslassleitung (111) zirkuliert, strikt kleiner ist als der, der von einem gleichen Dämpfestrom erlitten wird, wenn die bewegliche Wand in der ersten Stellung ist.

2. Füllstutzen (41) nach Anspruch 1, wobei die Abscheidemittel des Flüssigkeits-Dampfabscheiders (1a, 1b) wenigstens eine Wand (130, 130a, 130b) aufweisen, die um eine vorzugsweise vertikale Achse (XX') drehbeweglich ist.

3. Füllstutzen (41) nach Anspruch 2, wobei der Hohlkörper (120) des Flüssigkeits-Dampfabscheiders (1a, 1b) die allgemeine Form eines Zylinders aufweist, mit der gleichen Achse wie die Drehachse (XX') der beweglichen Wand, und einen kreisrunden Querschnitt aufweist, dessen Innendurchmesser im Wesentlichen gleich einer Breite (l) der beweglichen Wand (130, 130a, 130b) ist.

4. Füllstutzen (41) nach Anspruch 2 oder Anspruch 3, wobei die Abscheidemittel (130) des Flüssigkeits-Dampfabscheiders (1b) zwei bewegliche Wände (130a, 130b) aufweisen, die so angeordnet sind, dass, wenn sie in der zweiten Stellung platziert sind, Abschnitte des Schnittpunktes (112, 113) der Einlassleitung (110) und der Auslassleitung (111) mit dem Hohlkörper (120) in einem Raum enthalten sind, der sich zwischen den zwei beweglichen Wänden (130a, 130b) befindet.

5. Füllstutzen (41) nach Anspruch 4, ferner aufweisend eine isolierende Trennwand (134), welche die zwei beweglichen Wände (130a, 130b) miteinander verbindet und die so angeordnet ist, dass, wenn die zwei beweglichen Wände (130a, 130b) in der zweiten Stellung platziert sind, die Einlassleitung (110) und die Auslassleitung (111) über einen Durchlass verbunden sind, der von der Entwässerungsleitung (123) isoliert ist und zwischen den zwei beweglichen Wänden (130a, 130b) liegt und sich zwischen einer oberen Platte (131) und der isolierenden Trennwand (134) befindet.

6. Füllstutzen (41) nach einem der Ansprüche 1 bis 5, aufweisend eine Klappe (210), die beweglich ist zwischen einer geöffneten Position, die den Durchlass zwischen der Entwässerungsleitung (123) und der Aufnahmeleitung (200) frei lässt, wenn die Abscheidemittel (130) in der ersten Stellung sind, und einer geschlossenen Position, welche die Verbindung zwischen der Entwässerungsleitung (123) und der Aufnahmeleitung (200) schließt, wenn die Abscheidemittel (130) in der zweiten Stellung sind.

7. Füllstutzen (41) nach Anspruch 1, wobei die Abscheidemittel (130) des Flüssigkeits-Dampfabscheiders (1c) wenigstens eine Wand (135) aufweisen, die um eine vorzugsweise horizontale Achse (YY') drehbeweglich ist.

8. Füllstutzen (41) nach Anspruch 7, wobei:
- in der ersten Stellung, die bewegliche Wand (135) des Flüssigkeits-Dampfabscheiders (1c) im Wesentlichen senkrecht zu dem Dämpfestrom, der über die Einlassleitung (110) in den Hohlkörper (120) eintritt, angeordnet ist,
- in der zweiten Stellung, die bewegliche Wand (135) des Flüssigkeits-Dampfabscheiders (1c) so angeordnet ist, dass die Einlassleitung (110) und die Auslassleitung (111) von der Entwässerungsleitung (123) isoliert sind.

9. Füllstutzen (41) nach Anspruch 7 oder Anspruch 8, wobei der Hohlkörper (120) des Flüssigkeits-Dampfabscheiders (1c) eine im Wesentlichen zylindrische oder halbkreisrunde Form aufweist, und wobei die bewegliche Wand (135) um eine Achse (YY') schwenkt, die sich in einer Äquatorialebene des Hohlkörpers (120) befindet und eine Form aufweist, die einem Äquatorialinnenquerschnitt des Hohlkörpers (120) ähnlich ist.

10. Füllstutzen (41) nach Anspruch 1, wobei die Abscheidemittel (139b, 145) des Flüssigkeits-Dampfabscheiders (1d, 1e) entlang einer vertikalen Richtung (XX') in Translation beweglich sind.

11. Füllstutzen (41) nach Anspruch 10, wobei der Hohlkörper (120) eine im Wesentlichen zylindrische Form aufweist, und wobei die Abscheidemittel einen Kolben (139) aufweisen, der im Inneren des Hohlkörpers entlang einer vorzugsweise vertikalen Achse (XX') in Translation beweglich ist und einen Kopf (139a) aufweist, dessen Querschnitt dem Innenquerschnitt des Hohlkörpers (120) entspricht, und eine Wand (139b) aufweist, die sich unter dem Kopf (139a) im Wesentlichen senkrecht zu dem Dämpfestrom,, der über die Einlassleitung (110) in den Hohlkörper eintritt, so erstreckt, dass:
- in der ersten Stellung Abschnitte des Schnittpunktes (112, 113) der Einlassleitung (110) und der Auslassleitung (111) mit dem Hohlkörper (120) unterhalb des Kopfes (139a) des beweglichen Kolbens (139) angeordnet sind, in der Form, dass die Wand (139b) des beweglichen Kolbens (139) mit den Wänden des Hohlkörpers (120) ein Labyrinth bildet, in dem der Dämpfestrom (50), der von der Einlassleitung (110) kommt und zu der Auslassleitung (111) hin geleitet wird, zum Zirkulieren gezwungen wird,
- in der zweiten Stellung die Abschnitte des Schnittpunktes (112, 113) der Einlassleitung (110) und der Auslassleitung (111) mit dem Hohlkörper (120) oberhalb des Kopfes (139a) des beweglichen Kolbens (139) angeordnet sind, in der Form, dass sie die Einlassleitung (110) und die Auslassleitung (111) von der Entwässerungsleitung (123) isolieren.

12. Füllstutzen (41) nach Anspruch 10, wobei die Abscheidemittel wenigstens eine feststehende Wand (124) aufweisen, die sich von dem oberen Teil des Hohlkörpers in einer Richtung erstreckt, die zu dem Dämpfestrom, der über die Einlassleitung (110) in den Hohlkörper eintritt, im Wesentlichen senkrecht ist, wobei entlang der feststehenden Wand eine bewegliche Wand (145), die zu der feststehenden Wand (124) parallel ist, so gleitet, dass:
- in der ersten Stellung die bewegliche Wand (145) in der Verlängerung der feststehenden Wand (124) so angeordnet ist, dass der Dämpfestrom von der Einlassleitung (110) zu der Auslassleitung (111) hin entsprechend einem bestimmten Pfad zirkuliert,
- in der zweiten Stellung die bewegliche Wand (145) die feststehende Wand (124) überdeckt, damit der Dämpfestrom von der Einlassleitung (110) zu der Auslassleitung (111) hin entsprechend einem Pfad zirkuliert, der kürzer ist als in der ersten Stellung.

13. Füllstutzen (41) nach Anspruch 12, wobei die bewegliche Wand (145) mittels eines Verbindungsfußes (149) mit einem Verschlusskörper (148) so verbunden ist, dass, wenn die bewegliche Wand (145) in der ersten Stellung angeordnet ist, der Verschlusskörper (148) den Durchlass zwischen der Entwässerungsleitung (123) und der Aufnahmeleitung (200) geöffnet lässt, und, wenn die bewegliche Wand (145) in der zweiten Stellung angeordnet ist, der Verschlusskörper (148) den Durchlass zwischen der Entwässerungsleitung (12) und der Aufnahmeleitung (200) schließt.

14. Füllstutzen (41) nach einem der Ansprüche 1 bis 14, ferner aufweisend Mittel (115, 133, 137, 138, 210, 213, 214, 215, 218, 219, 140, 141), um den Übergang des Flüssigkeits-Dampfabscheiders (1a, 1b, 1c, 1d, 1e) von der ersten Stellung in die zweite Stellung unter der Einwirkung der Einführung der Kanüle (3) in die Aufnahmeleitung (200) des Füllstutzens (41) zu aktivieren.

15. Füllstutzen (41) nach einem der Ansprüche 1 bis 14, wobei der Flüssigkeits-Dampfabscheider (1a, 1b, 1c, 1d, 1e) elastische Mittel (114, 142, 146) aufweist, um den Übergang des Flüssigkeits-Dampfabscheiders (1a, 1b, 1c, 1d, 1e) von der zweiten Stellung in die erste Stellung zu bewirken, wenn die Kanüle (3) aus der Aufnahmeleitung (200) des Füllstutzens (41) herausgezogen wird.

## Claims

1. A filler neck (41) of a fuel tank (4) comprising a receiving pipe (200) intended to receive a filling nozzle (3), and a liquid-vapor separator (1a, 1b, 1c, 1d, 1e), comprising a hollow body (120) into which a single vapor flow inlet pipe (110) from the fuel tank (4), a drainage pipe (123) flowing into the receiving pipe (200), and a vapor outlet pipe (111) open, said hollow body (120) containing separating means (130, 130a, 130b, 135, 139, 145) allowing the extraction of droplets present in the vapor flow such that they flow into the drainage pipe (123),
**characterized in that** the separating means comprise at least one wall (130, 130a, 130b, 135, 139b, 145) movable between a first and a second configuration such that:
- in the first configuration, the movable wall (130, 130a, 130b, 135, 139b, 145) is arranged substantially vertically and forms together with the walls (122) of the hollow body (120) a labyrinth in which the vapor flow passing from the inlet pipe (110) to the outlet pipe (111) is forced to circulate along a given path (50) bypassing said wall, so that fuel droplets contained in the vapors are deposited on the movable wall (130) and flow by gravity towards the receiving pipe (200), and that,
- in the second configuration, the movable wall (130, 130a, 130b, 135, 139b, 145) is arranged so as to define a passage in which the vapor flow circulates from the inlet pipe (110) to the outlet pipe (111) along a path (51) avoiding all or part of the path (50) taken by said vapors when the movable wall is in the first configuration, the cross-section of said passage being arranged such that the load loss suffered by the vapor flow circulating in the hollow body between the inlet pipe (110) and the outlet pipe (111) is strictly smaller than that suffered by a same vapor flow when the movable wall is in the first configuration.

2. The filler neck (41) as claimed in claim 1, wherein the separating means of the liquid-vapor separator (1a, 1b) comprise at least one wall (130, 130a, 130b) movable in rotation about a preferably vertical axis (XX").

3. The filler neck (41) as claimed in claim 2, wherein the hollow body (120) of the liquid-vapor separator (1a, 1b) has the general form of a cylinder with the same axis as the axis (XX') of rotation of the movable wall, and a circular cross-section, the inner diameter of which is substantially equal to a width (I) of said movable wall (130, 130a, 130b).

4. The filler neck (41) as claimed in claim 2 or claim 3, wherein the separating means (130) of the liquid-vapor separator (1b) comprise two movable walls (130a, 130b), arranged such that when placed in said second configuration, the sections of the intersection (112, 113) of the inlet pipe (110) and the outlet pipe (111) with the hollow body (120) are contained in a space located between the two movable walls (130a, 130b).

5. The filler neck (41) as claimed in claim 4, also comprising an isolating partition (134) connecting together the two movable walls (130a, 130b) and arranged such that when the movable walls (130a, 130b) are placed in the second configuration, the inlet pipe (110) and the outlet pipe (111) communicate via a passage isolated from the drainage pipe (123) and contained between the two movable walls (130a, 130b) and situated between an upper plate (131) and the isolating partition (134).

6. The filler neck (41) as claimed in any of claims 1 to 5, comprising a valve (210) movable between an open position opening the passage between the drainage pipe (123) and the receiving pipe (200) when the separating means (130) are in the first configuration, and a closed position closing the communication between the drainage pipe (123) and the receiving pipe (200) when the separating means (130) are in the second configuration.

7. The filler neck (41) as claimed in claim 1, wherein the separating means (130) of the liquid-vapor separator (1c) comprise at least one wall (135) movable in rotation about a preferably horizontal axis (YY').

8. The filler neck (41) as claimed in claim 7, wherein:
- in said first configuration, the movable wall (135) of the liquid-vapor separator (1c) is arranged substantially perpendicular to the vapor flow entering the hollow body (120) via the inlet pipe (110),
- in said second configuration, the movable wall (135) of the liquid-vapor separator (1c) is arranged such that the inlet pipe (110) and the outlet pipe (111) are isolated from the drainage pipe (123).

9. The filler neck (41) as claimed in claim 7 or claim 8, wherein the hollow body (120) of the liquid-vapor separator (1c) has a substantially cylindrical or hemispherical form, and wherein the movable wall (135) pivots about an axis (YY') situated in an equatorial plane of the hollow body (120) and has a form similar to an inner equatorial cross-section of said hollow body (120).

10. The filler neck (41) as claimed in claim 1, wherein the separating means (139b, 145) of the liquid-vapor separator (1d, 1e) are movable in translation along a vertical direction (XX").

11. The filler neck (41) as claimed in claim 10, wherein the hollow body (120) has a substantially cylindrical form and wherein the separating means comprise a piston (139) which is movable in translation inside the hollow body along a preferably vertical axis (XX') and comprises a head (139a), the cross-section of which corresponds to the inner cross-section of the hollow body (120), and a wall (139b) extending below said head (139a) substantially perpendicular to the vapor flow entering the hollow body via the inlet pipe (110), such that:
- in the first configuration, the sections of intersection (112, 113) of the inlet pipe (110) and outlet pipe (111) with the hollow body (120) are arranged below the head (139a) of the movable piston (139), such that the wall (139b) of the movable piston (139) together with the walls of the hollow body (120) forms a labyrinth in which the vapor flow (50) travelling from the inlet pipe (110) to the outlet pipe (111) is forced to circulate,
- in the second configuration, said sections of intersection (112, 113) of the inlet pipe (110) and outlet pipe (111) with the hollow body (120) are arranged above the head (139a) of the movable piston (139) so as to isolate the inlet pipe (110) and the outlet pipe (111) from the drainage pipe (123).

12. The filler neck (41) as claimed in claim 10, wherein the separating means comprise at least one fixed wall (124) extending from the upper part of the hollow body in a direction substantially perpendicular to the vapor flow entering the hollow body via the inlet pipe (110), along which fixed wall a movable wall (145) slides parallel to the fixed wall (124), such that:
- in the first configuration, the movable wall (145) is arranged in the extension of the fixed wall (124) so that the vapor flow circulates from the inlet pipe (110) to the outlet pipe (111) along a given path,
- in the second configuration, the movable wall (145) is superposed over the fixed wall (124) so that the vapor flow circulates from the inlet pipe (110) towards the outlet pipe (111) along a shorter path than in the first configuration.

13. The filler neck (41) as claimed in claim 12, wherein the movable wall (145) is connected via a connecting foot (149) to a shutter (148) such that when the movable wall (145) is arranged in the first configuration, the shutter (148) opens the passage between the drainage pipe (123) and the receiving pipe (200), and when the movable wall (145) is arranged in the second configuration, the shutter (148) closes the passage between the drainage pipe (123) and the receiving pipe (200).

14. The filler neck (41) as claimed in any of claims 1 to 14, also comprising means (115, 133, 137, 138, 210, 213, 214, 215, 218, 219, 140, 141) for activating the passage of the liquid-vapor separator (1a, 1b, 1c, 1d, 1e) from the first configuration to the second configuration when the nozzle (3) is introduced into the receiving pipe (200) of the filler neck (41).

15. The filler neck (41) as claimed in any of claims 1 to 14, wherein the liquid-vapor separator (1a, 1b, 1c, 1d, 1e) comprises elastic means (114, 142, 146) for causing the liquid-vapor separator (1a, 1b, 1c, 1d, 1e) to pass from the second configuration to the first configuration when the nozzle (3) is withdrawn from the receiving pipe (200) of the filler neck (41).
